# EUROPEAN PATENT SPECIFICATION

(11) **EP 1 842 113 B1**
(45) Date of publication and mention of the grant of the patent: **10.08.2011**
(21) Application number: 06703356.3
(22) Date of filing: 20.01.2006
(51) Int. Cl.: G04F 1/06, G01K 3/04

(54) **OPEN LIFE INDICATOR LABEL FOR FOOD PRODUCE AND SUCHLIKE**
GEBRAUCHSLEBENSDAUERANZEIGE NACH DEM ÖFFNEN FÜR NAHRUNGSMITTELPRODUKTE U. DGL.
ETIQUETTE INDICATRICE POLYVALENTE POUR PRODUITS ALIMENTAIRES ET SIMILAIRES

(30) Priority: 21.01.2005 GB 0501304; 24.12.2005 GB 0526451
(43) Date of publication of application: 10.10.2007
(73) Proprietor: Intray Ltd., Wilmslow Cheshire SK9 4BW (GB)
(72) Inventor: ROBINSON, John, Rochdale, Lancashire OL16 4PJ (GB); WINTERSGILL, Stephen, Accrington, Lancashire BB5 2RX (GB); LIN, Long, Morley, Leeds LS27 0HT (GB); MCLENNAN, Alexander Roy, Cheshire SK9 4BW (GB)
(74) Representative: Dauncey, Mark Peter
(86) International application number: PCT/GB2006/000190
(87) International publication number: WO 2006/077413

(56) References cited:
- WO-A-97/42552
- WO-A-2005/010624
- WO-A-2006/058228
- GB-A- 2 344 101
- US-A- 3 018 611
- US-A- 3 480 402
- US-A- 3 520 124
- US-A- 4 212 153
- US-A- 4 229 813
- US-A- 4 292 916
- US-A- 4 987 849
- US-A1- 2003 235 119

## Description

The present invention is in the field of time dependent labelling, more specifically in time dependent indicator labels suitable for use on food and other products.

The foregoing invention will be described with reference to its use on food products, however it is recognised and will be readily apparent that the invention could also find application in other fields such as pharmaceutical products, cosmetics and any other products which have a limited open life.

It is common with food products, especially those in jars, to provide a "best before" date, after which the product should not be used; however, this date is only a reliable measure if the primary packaging is in an unopened state. It is becoming increasingly common for a second date to be provided on external packaging, a "Once opened, use within" date, which is an attempt to reflect the accelerated decay of the produce following breach of the primary packaging. Whilst the use of a "Once opened, use within" date is an advance on the previous state of the art, it relies on the consumer remembering when a product was first opened. This is fine when the open life is short (e.g. 3 days for orange juice); however, some products have an open life of several weeks or even months, at which point the consumer's memory becomes an unreliable measure, with people tending to rely on the smell of the product or assuming it will be alright and using it anyway. This is unsatisfactory both for the consumer, who will get poor performance from the product, and may suffer an upset stomach or other complaint as a result of eating tainted food, and also for the manufacturer, who will probably lose a future customer, due to their dissatisfaction with the product.

Clearly there is a need, both from the manufacturers' and the consumers' perspective, for a simple, inexpensive and reliable indicator for such produce containers in order to better safeguard the consumers' health and also to improve customer perception of manufacturers.

A number of means to accomplish this objective have been attempted in the past and are known in the art; however, all have their drawbacks which are to be addressed by the present invention. These previous attempts will be discussed briefly forthwith.

US 4,292,916 BRADLEY describes a timer and storage condition indicator, utilising a physical and/or chemical interaction between two layers of a label. Reactive chemicals migrate through a porous layer into a soluble ink, thereby revealing an expiry message.

US 5,053,339 PATEL describes diffusion of a reactive/coloured agent through a porous/permeable matrix presenting a colour change in a viewing area. This allows time/temperature observation over a period of time as the colour on view increases in intensity.

US 5,633,835 and US 5,446,705 (both to) HAAS describe a longer term solution, whereby migration between two layer of a label is prevented by a barrier layer, the barrier layer being soluble. Upon dissolution/breach of the barrier layer the colour change brought about by contact between the reactive layers is substantially instantaneous.

WO 03/007088 ISBITSKY works along similar lines, but initiation is by a consumer. Initiation involves the consumer applying pressure directly to a portion of an indicator label in order to rupture a reactant reservoir or force the reactant from a storage reservoir into a second reservoir, which is in direct contact with a porous migration medium. Once in the second reservoir the reactant migrates at a predetermined rate along the migration medium, with a colour change being observed along its length.

US 6,741,523 BOMMARITO describes a user activated, time dependent labelling system. The user activates the system by physically puncturing/fracturing a fluid reservoir, the fluid then flows along channels defined in a "microstructured substrate" at a pre-determined rate, the passage of said fluid being observed either by virtue of said fluid being coloured or said substrate having specific retro-reflective properties.

In the case of the PATEL and HAAS documents, the timer is started upon manufacture or application of the label, whereas the BRADLEY document, while covering this possibility, also allows for user initiation. The ISBITSKY, BOMMARITO and some embodiments of the BRADLEY devices rely on a consumer having a direct and conscious input into the working of the timer. Both of these systems have inherent problems, the PATEL and HAAS devices are fine as USE BY indicators, but due to their initiation at manufacture can take no account of the accelerated rate of produce decay upon breach of primary packaging exposing the produce to bacteria and suchlike present in the atmosphere. Equally the user activated devices described in BOMMARITO, BRADLEY and ISBITSKY rely on a consumer remembering to activate the device upon opening their produce, this is easily forgotten and could leave unaffected exactly the problems they are intended to address.

A few attempts have been made to address the aforementioned shortcomings of the above products. WO 01/26993 KAGAN and GB 2,344,101 TAYLOR both describe time indicating closures for containers. Both documents describe ostensibly the same system, whereby a reservoir is breached by the act of opening the closure/lid of a container holding the perishable produce. In both cases there is a multi-component lid with various moving parts designed to puncture a reservoir containing a reactive compound. Both of these devices borrow heavily from known art in the field of tamper evidence (such as WO 99/24329 TYLDESLEY) and suffer from the same main drawback, which is that a multi-component lid/closure is difficult to manufacture and assemble and therefore too costly to gain mainstream commercial acceptance.

The terms capillary/capillaries/"capillary member(s)" as used herein are not intended to be restricted to whole tubes of circular cross section, rather they refer to any tube(s) or channel(s), open or enclosed, which is/are of appropriate dimension and construction to exhibit capillary action on one or more solvents by virtue of the interrelation of their respective surface tension characteristics.

The term solvent is not intended to be restricted merely to classical organic solvents, rather should be interpreted to mean any liquid or blend of liquids within which a second substance (in this instance the dye) could be dissolved. Hence water would be classed as a solvent, which is typically not the case within many industries (e.g. printing).

The label of a first aspect of the present invention works along the following principle. Immediately following activation, a solvent tracks along one or more capillaries from a solvent reservoir to a dye store, the dye then dissolves into the solvent and diffuses back to the solvent reservoir. The solvent reservoir is provided with a viewing window such that the colour change can be readily observed.

Various factors effect the rate at which the solvent tracks along the capillaries (Capillary Tracking Time, CTT) and also the rate at which the dye both dissolves and diffuses back along the capillaries (Dye Diffusion Time, DDT):
- The surface tension of the solvent
- The viscosity of the solvent
- The surface tension of the substrate from which the capillaries are formed
- The dimensions of the capillary (depth, width, length)
- The shape of the capillary
- The solubility of the dye

Whilst a number of these factors effect both the rate at which the solvent tracks along the capillaries and also the rate at which the dye dissolves and diffuses back along the capillaries, the choice of substrate and also capillary size and shape have a considerably greater effect on the CCT than the DDT. Adjustment of these factors allows a large degree of control over both CCT and DDT within a single set of capillaries and also allow easy provision of two or more sets of capillaries which present different total times (CCT+DDT) for discolouration to occur. Thus it can be seen that it would be easy to provide a label giving a first discolouration after a first pre-determined time, followed by a second discolouration after a further interval.

The advantage of a system such as this is that, using the non-limiting example of such a label applied to ajar of mayonnaise, upon opening the jar, the label is activated, a green underprint is visible through the solvent reservoir, informing the consumer that the mayonnaise is good to use, after a first predetermined time, a first dye discolours the solvent to an amber colour (covering the green print) informing the consumer that the mayonnaise is nearing the end of it's usable life, and that caution should be exercised and consideration given to purchasing a replacement jar. After a further, pre-determined interval, a second dye overpowers the first dye and discolours the solvent to a strong red colour, informing the consumer that the mayonnaise is no longer safe to use and should be discarded. The amber warning period gives the consumer notice that the product is approaching the end of its useful life, thereby allowing them to avoid the embarrassment of running out of essential products on the night of a dinner party for example.

According to a first aspect of the present invention, there is provided a time indicator label comprising a backing layer having a solvent reservoir portion and two or more dye store portions defined thereon, an active layer comprising at least one solvent applied to the solvent reservoir portion and at least one dye applied to each of the dye store portions, and a barrier layer removal of at least a portion of which activates the time indicator label, wherein each of the dye store portions is connected to the solvent reservoir portion via one or more capillary members, such that each dye store portion has a dedicated one or more capillary members connecting it to the solvent reservoir portion, the dye store portions having different coloured dyes applied thereto.

Preferably said backing layer is further provided with an adhesive on the side opposite to the active layer, such that it can be easily attached to a container or other receptacle.

Said solvent reservoir portion, dye store portions and capillary members may be defined via embossing, printing, etching or any other technique.

Said solvent and dye are optionally entrained within an adhesive. Said solvent(s) and said dye(s) are preferably applied via a printing process.

Preferably said solvent is a so-called green solvent such as glycerol or diethylene glycol.

Preferably said solvent has a sufficient degree of temperature sensitivity to confer time-temperature indication characteristics upon the label.

Preferably said barrier layer covers said solvent reservoir portion, said two or more dye store portions and said capillary members.

Preferably the barrier layer comprises one or more removable portions which block one or more of said capillary members in one or more areas, whereby removal of said removable portion(s) has the effect of unblocking said one or more capillaries.

Preferably said one or more removable portions of said barrier layer are removed automatically upon opening of whatever container the label has been applied to, preferably said automatic removal is achieved by attaching part of said one or more removable portions to the lid of said container, such that removal of said lid causes removal of said one or more removable portions.

Optionally said barrier layer is translucent over the majority of its area, with a windowed area being provided for observation, said windowed area preferably being over the solvent reservoir portion, this may be achieved by overlaying a further windowed substrate onto a transparent barrier layer or by manipulation of the material properties of the barrier layer, such as selective chemical vapour deposition of aluminium.

Said backing layer may be printed over some or all of its surface area, preferably said printed area corresponds to said solvent reservoir portion.

In a preferred embodiment, there is provided a time indicator label comprising a backing layer, an active layer and a barrier layer, characterised in that removal of said barrier layer activates said time indicator label, said backing layer comprising a solvent reservoir portion, a first set of one or more capillary members connecting said solvent reservoir portion to a first dye store portion, a second set of one or more capillary members connecting said solvent reservoir portion to a second dye store portion, said active layer comprising a solvent, a first dye and a second dye, said solvent, first dye and second dye being respectively applied within said solvent reservoir, first dye store and second dye store portions; said barrier layer being applied over the solvent reservoir portion, dye store portions and capillary members, said barrier layer further comprising removable portions, said removable portions being located adjacent said solvent reservoir and dye stores and being applied over the capillary members in such a manner as to block said capillaries in these pre-defined areas, said barrier layer being further provided with window means such that the solvent reservoir portion is visible.

The invention will be better understood with reference to the foregoing embodiments, which are given merely by way of example and are in no way intended to limit the scope of the present invention which is defined by the appended claims.

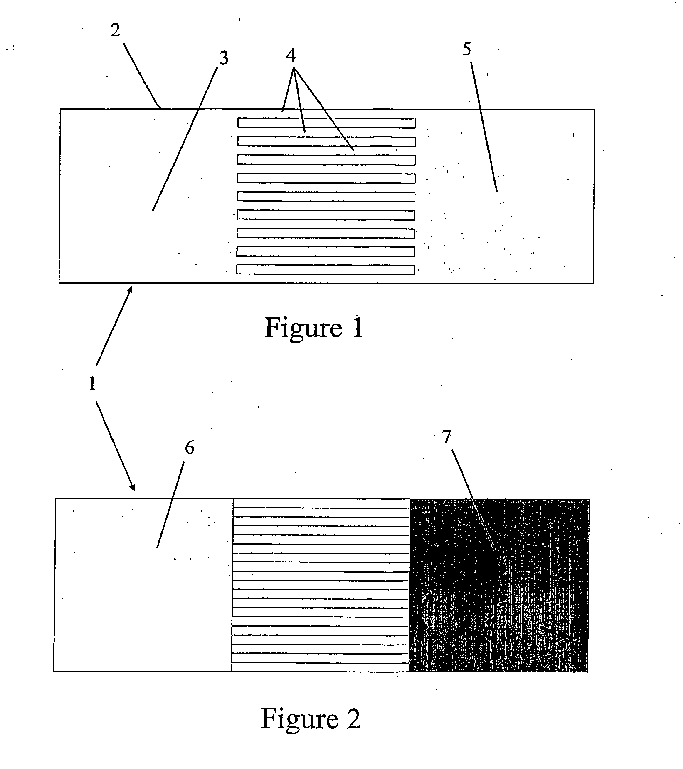

Figure 1 shows a top view of the backing layer of a label not according to the present invention but which shares many features with the present invention and is included for reference since its operation is based on the same fundamental principle as the invention.
Figure 2 shows the same backing layer after both solvent and dye have been applied thereto.

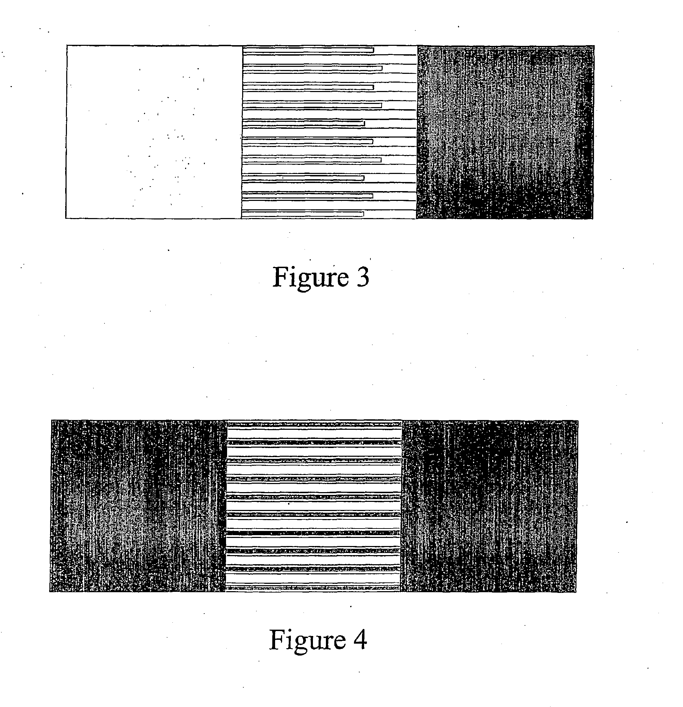

Figure 3 shows the same backing layer/solvent/dye combination after activation, but before the solvent has reached the dye.
Figure 4 shows the same combination after the dye has diffused back through the capillaries and discoloured the solvent reservoir.

A first type of label not according to the current invention is described which demonstrates in simplest possible terms the manner in which the label according to the invention operates.

A label 1 comprises a backing layer 2 of polypropylene extrusion coated onto an aluminium foil substrate. The backing layer 2 has been embossed with a solvent reservoir portion 3, a series of capillaries 4 and a dye store portion 5. A solvent 6 is applied to the solvent reservoir portion 3 and a dye 7 is applied to the dye store portion 5, immediately following which a barrier layer (not shown) is laminated over the entire area of the backing layer, the method of lamination being such that the barrier layer blocks the capillaries 4 at either end, i.e. immediately adjacent both the solvent 6 and the dye 7. The barrier layer has a viewing window located over the solvent reservoir 3, but is otherwise translucent. The barrier layer comprises two frangible portions, where it blocks the capillaries 4, said frangible portions both being attached to a "pull tab". Upon pulling the "pull tab" the frangible portions are removed thereby unblocking the capillaries 4, at this point the solvent begins to be drawn up the capillaries by the process of capillary action, although with the solvent being colourless and the capillaries 4 being obscured by the barrier layer there is no visible effect. After a pre-determined time (henceforth referred to as the Capillary Tracking Time or CTT) the solvent 6 reaches the dye 7, at this point the dye 7 begins to dissolve into the solvent 6 and diffuse back along the capillaries 4, although again there is no visible effect due to the barrier layer obscuring the dye store 5 and the capillaries 4. After, a further pre-determined time (henceforth referred to as the Dye

Diffusion Time or DDT) the dye 7 diffuses back along the entire length of the capillaries 4 and discolours the solvent remaining in the solvent reservoir 3. At this point the label gives a visible indication, since a user can observe the discolouration of the solvent reservoir 3 through the windowed portion of the barrier layer.

According to a first embodiment of the present invention, a label comprises a backing layer of polypropylene extrusion coated onto an aluminium foil substrate. The backing layer has been embossed with a solvent reservoir portion, a first series of capillaries leading to a first dye store portion and a second set of capillaries leading to a second dye store portion. Further to this, a coloured print is laid down on the solvent reservoir portion. A solvent is applied to the solvent reservoir portion, a first coloured dye is applied to the first dye store portion and a second coloured dye is applied to the second dye store portion, immediately following which a barrier layer (not shown) is laminated over the entire area of the backing layer, the method of lamination being such that the barrier layer blocks both sets of capillaries at either end, i.e. immediately adjacent both the solvent and the first and second dyes. The barrier layer has a viewing window located over the solvent reservoir, allowing the coloured print to be seen, but is otherwise translucent. The barrier layer comprises a plurality of frangible portions, where it blocks the capillaries, said frangible portions being attached to a "pull tab". Upon pulsing the "pull tab" the frangible portions are removed thereby unblocking the capillaries, at this point the solvent begins to be drawn up both sets of capillaries by the process of capillary action, although with the solvent being colourless and the capillaries being obscured by the barrier layer there is no visible effect. After a predetermined time (henceforth referred to as the Capillary Tracking Time or CTT) the solvent reaches the first dye, at this point the first dye begins to dissolve into the solvent and diffuse back along the first set of capillaries, although again there is no visible effect due to the barrier layer obscuring the dye store 5 and the capillaries 4. After a further pre-determined time (henceforth referred to as the Dye Diffusion Time or DDT) the first dye diffuses back along the entire length of the first set of capillaries and discolours the solvent remaining in the solvent reservoir. At this point the label gives a visible indication, since a user can observe the discolouration of the solvent reservoir through the windowed portion of the barrier layer. At the same time as solvent begins to be drawn up the first set of capillaries, solvent is also drawn up the second set of capillaries, reaching the second dye at a second pre-determined time, the second dye then dissolves and diffuses back along the second set of capillaries, arriving at the solvent reservoir after a further, second DDT. If the second dye is a stronger colour than the first dye, and the first dye is a stronger colour than the initial print laid down then a traffic light effect can be obtained. For example, if the initial print is pale green, the first dye is orange and the second dye is a strong red colour then the following series of events occurs after activation. Initially, the green print is visible through the transparent portion of the barrier layer, after the first CCT and DDT expire, the orange dye discolours the solvent reservoir, presenting a visible amber signal, after the second CCT and DDT expire, the red dye discolours the (already discoloured) solvent reservoir, presenting a vivid red signal.

## Claims

1. A time indicator label (1) comprising a backing layer (2) having a solvent reservoir portion (3) and two or more dye store portions (5) defined thereon, an active layer comprising at least one solvent (6) applied to the solvent reservoir portion (3) and at least one dye (7) applied to each of the dye store portions (5), and a barrier layer removal of at least a portion of which activates the time indicator label (1), wherein each of the dye store portions (5) is connected to the solvent reservoir portion (3) via one or more capillary members (4), such that each dye store portion (5) has a dedicated one or more capillary members (4) connecting it to the solvent reservoir portion (3), the dye store portions (5) having different coloured dyes (7) applied thereto.

2. A time indicator label (1) according to claim 1, wherein the backing layer (2) is further provided with an adhesive on a side opposite to the active layer, such that it can be attached to a container or other receptacle.

3. A time indicator label (1) according to claim 1 or 2, wherein said solvent(s) (6) and/or said dye(s) (7) are entrained within an adhesive.

4. A time indicator (1) according to any one of claims 1 to 3, wherein said solvent(s) (6) and/or said dye(s) (7) are applied via a printing process.

5. A time indicator label (1) according to any preceding claim, **characterised in that** said backing layer (2) comprises a single solvent reservoir portion (3).

6. A time indicator label (1) according to any preceding claim, wherein the solvent reservoir portion (3), dye store portions (5) and capillary members (4) are formed by embossing, printing or etching.

7. A time indicator label (1) according to any preceding claim, wherein said solvent (6) is a so-called green solvent (6) such as glycerol or diethylene glycol.

8. A time indicator label (1) according to any preceding claim, wherein said solvent (6) has a sufficient degree of temperature sensitivity to confer time-temperature indication characteristics upon the label (1).

9. A label (1) according to any preceding claim, wherein said barrier layer covers the solvent reservoir portion (3), the two or more dye store portions (5) and said capillary members (4).

10. A label (1) according to any preceding claim, wherein said barrier layer comprises one or more removable portions which block the capillary members (4) in one or more areas, whereby removal of said removable portion(s) has the effect of unblocking the capillary members (4).

11. A label (1) according to claim 10, wherein the one or more removable portions of said barrier layer are configured so as to be removed automatically upon opening of a container to which the label (1) is applied.

12. A label (1) according to claim 11, wherein the one or more removable portions are configured such that part of the one or more removable portions is attachable, in use, to a lid of the container, such that removal of a lid causes removal of said one or more removable portions.

13. A label (1) according to any preceding claim, wherein said barrier layer is translucent over the majority of its area, with at least one windowed area being provided for observation.

14. A label (1) according to claim 13, wherein the at least one windowed area is positioned over the solvent reservoir portion (3).

15. A label (1) according to either of claims 13 or 14, wherein the windowed area is formed either by overlaying a windowed substrate on to a transparent barrier layer or by manipulation of the material properties of the barrier layer.

16. A label (1) according to claim 15, wherein the manipulation is by selective chemical vapour deposition of aluminium.

## Patentansprüche

1. Zeitindikatoretikett (1), das eine Trägerschicht (2) mit einem Lösungsmittelbehälterabschnitt (3) und zwei oder mehreren darauf definierten Farbstoftspeicherabschnitten (5), eine aktive Schicht mit mindestens einem auf den Losungsmittelbehäherabschnitt (3) aufgebrachten Lösungsmittel (6) und mindestens einem auf jeden der Farbstoffspeicherabschnitte (5) aufgebrachten Färbstoff (7) und eine Sperrschicht aufweist, wobei durch Entfernen mindestens eines Teils der Sperrschicht das Zeitindikatoretikett (1) aktiviert wird, wobei jeder der Farbstoffspeicherabschnitte (5) über ein oder mehrere Kapillarelemente (4) mit dem Läsungsmittelbehälterabschnitt (3) verbunden ist, so dass jeder Farbstoffspeicherabschnitt (5) ein oder mehrere zugehörige Kapillarelemente (4) aufweist, die ihn mit dem Lösungsmittelbehälterabschnitt (3) verbinden, wobei auf die Farbstoffspeicherabschnitte (5) Farbstoffe (7) von verschiedenen Farben aufgebracht sind.

2. Zeitindikatoretikett (1) nach Anspruch 1, Wobei die Trägerschicht (2) ferner auf einer der aktiven Schicht gegenüberliegenden Seite mit einem Klebstoff versehen ist, so dass sie an einem Behälter oder einem anderen Gefäß befestigt werden kann.

3. Zeitindikatoretikett (1) nach Anspruch 1 oder 2, wobei das (die) Lösungsmittel (6) und/oder der (die) Farbstoff(e) (7) innerhalb eines Klebstoffs mitgeführt werden.

4. Zeitindikatoretikett (1) nach einem der Ansprüche 1 bis 3, wobei das (die) Lösungsmittel (6) und/oder der (die) Farbstoff(e) (7) durch ein Druckverfahren aufgebracht werden.

5. Zeitindikatoretikett (1) nach einem der vorstehenden Ansprüche, **dadurch gekennzeichnet, dass** die Trägerschicht (2) einen einzigen Lösungsmittelbehälterabschnitt (3) aufweist.

6. Zeitindikatoretikett (1) nach einem der vorstehenden Ansprüche, wobei der Lösungsmittelbehälterabschnitt (3), die Farbstoffspeicherabschnitte (5) und die Kapillarelemente (4) durch Prägen, Drucken oder Ätzen ausgebildet werden.

7. Zeitindikateretikett (1) nach einem der vorstehenden Ansprüche, wobei das Lösungsmittel (6) ein so genanntes grünes Lösungsmittel (6) ist, wie z. B. Glycerin oder Diethylenglycol.

8. Zeitindikatoretikett (1) nach einem der vorstehenden. Ansprüche, wobei das Lösungsmittel (6) einen ausreichenden Temperaturempfndlichkeitsgrad aufweist, um dem Etikett (1) zeitabhängige Temperaturanzeigeeigenschaften zu verleihen.

9. Zeitindtkatoretikett (1) nach einem der vorstehenden Ansprüche, wobei die Sperrschicht den Lösungsmittelbehälterabschnitt (3), die zwei oder mehreren Farbstoffspeicherabschnitte (5) und die Kapillarelemente (4) bedeckt.

10. Etikett (1) nach einem der vorstehenden Ansprüche, wobei die Sperrschicht einen oder mehrere entfernbare Abschnitte aufweist, welche die Kapillarelemente (4) in einem oder mehreren Bereichen blockieren, wodurch das Entfernen des einen oder der mehreren entfernbaren Abschnitte die Freigabe der Kapillarelemente (4) bewirkt.

11. Etikett (1) nach Anspruch 10, wobei der eine oder die mehreren entfernbaren Abschnitte der Sperrschicht so konfiguriert sind, dass sie nach dem Öffnen eines Behälters, an dem das Etikett (1) angebracht ist, automatisch entfernt werden.

12. Etikett (1) nach Anspruch 11, wobei der eine oder die mehreren entfernbaren Abschnitte so konfiguriert sind, dass ein Teil des einen oder der mehreren entfernbarren Abschnitte im Gebrauch an einem Deckel des Behälters so angebracht werden kann, dass das Entfernen eines Deckels zum Entfernen des einen oder der mehreren entfernbaren Abschnitte führt.

13. Etikett (1) nach einem der vorstehenden Ansprüche, wobei die Sperrschicht über den größten Teil ihrer Fläche lichtdurchlässig ist, wobei mindestens ein mit einem Fenster versehener Bereich zur Beobachtung vorgesehen ist.

14. Etikett (1) nach Anspruch 13, wobei der mindestens eine mit einem Fenster versehene Bereich über dem Lösungsmittelbehälterabschnitt (3) positioniert ist.

15. Etikett (1) nach einem der Ansprüche 13 oder 14, wobei der mit einem Fenster versehene Bereich entweder durch Überschichten einer lichtdurchlässigen Sperrschicht mit einem mit Fenster versehenen Substrat oder durch Manipulation der Materialeigenachaften der Sperrschicht gebildet wird.

16. Etikett (1) nach Anspruch 15, wobei die Manipulation durch selektives chemisches Aufdampfen von Aluminium erfolgt.

## Revendications

1. Étiquette indicatrice de temps (1) comprenant une couche de support (2) ayant une portion formant réservoir de solvant (3) et deux ou plusieurs portions de stockage de teinture (5) définies dessus, une couche active comprenant au moins un solvant (6) appliquée à la portion formant réservoir de solvant (3) et au moins une teinture (7) appliquée à chacune des portions de stockage de teinture (5), et une couche formant barrière dont l'élimination d'au moins une partie de celle-ci active l'étiquette indicatrice de temps (1), chacune des portions de stockage de teinture (5) étant connectée à la portion formant réservoir de solvant (3) via un ou plusieurs élément(s) capillaire(s) (4), de sorte que chaque portion de stockage de teinture (5) ait un ou plusieurs élément(s) capillaire(s) attribué(s) (4) le reliant à la portion formant réservoir de solvant (3), les portions de stockage de teinture (5) ayant différentes teintures colorées (7) appliquées dessus.

2. Étiquette indicatrice de temps (1) selon la revendication 1, la couche de support (2) étant en outre munie d'un adhésif sur un côté opposé à la couche active, de sorte qu'elle peut être fixée à un récipient ou à un autre réceptacle.

3. Étiquette indicatrice de temps (1) selon la revendication 1 ou 2, ledit(lesdits) solvant(s) (6) et/ou teinture(s) (7) est (sont) entraîné(e)(s) à l'intérieur d'un adhésif.

4. Étiquette indicatrice de temps (1) selon l'une quelconque des revendications 1 à 3, ledit(lesdits) solvant(s) (6) et/ou ladite(lesdites) teinture(s) (7) étant appliqué(e)(s) via un procédé d'impression.

5. Étiquette indicatrice de temps (1) selon l'une quelconque des revendications précédentes, **caractérisée en ce que** ladite couche de support (2) comprend une portion unique formant réservoir de solvant (3).

6. Étiquette indicatrice de temps(1) selon l'une quelconque des revendications précédentes, la portion formant réservoir de solvant (3), les portions de stockage de teinture (5) et les éléments capillaires (4) étant formés par gaufrage, impression ou gravure.

7. Étiquette indicatrice de temps (1) selon l'une quelconque des revendications précédentes, ledit solvant (6) étant un dénommé solvant vert (6) tel que le glycérol ou le diéthylène glycol.

8. Étiquette indicatrice de temps (1) selon l'une quelconque des revendications précédentes, ledit solvant (6) ayant un degré suffisant de sensibilité thermique pour conférer des caractéristiques d'indication de durée-température à l'étiquette (1).

9. Étiquette (1) selon l'une quelconque des revendications précédentes, ladite couche formant barrière recouvrant la portion formant réservoir de solvant (3), les deux portions de stockage de teinture ou plus (5) et lesdits éléments capillaires (4).

10. Étiquette (1) selon l'une quelconque des revendications précédentes, ladite couche formant barrière comprenant une ou plusieurs portion(s) amovible(s) qui bloque(nt) les éléments capillaires (4) en une ou plusieurs zone(s), moyennant quoi l'élimination de ladite(desdites) portion(s) amovible(s) a(ont) l'effet de débloquer les éléments capillaires (4).

11. Étiquette (1) selon la revendication 10, la une ou plusieurs portion(s) amovible(s) de ladite couche formant barrière étant confgurée(s) afin d'être retirée(s) automatiquement lors de l'ouverture d'un récipient sur lequel l'étiquette (1) serait appliquée.

12. Étiquette (1) selon la revendication 11, la une ou plusieurs portion(s) amovible(s) étant confgurée(s) de sorte qu'une partie de la une ou plusieurs portion(s) amovible(s) peut être fixée, lors de l'utilisation, à un couvercle du récipient, afin que le retrait d'un couvercle provoque l'élimination de ladite une ou desdites portion(s) amovible(s).

13. Étiquette (1) selon l'une quelconque des revendications précédentes, ladite couche formant barrière étant translucide sur la majorité de sa surface, avec au moins une zone à fenêtre étant proposée pour permettre l'observation.

14. Étiquette (1) selon la revendication 13, la au moins une zone à fenêtre étant positionnée au-dessus de la portion formant réservoir de solvant (3).

15. Étiquette (1) selon l'une ou l'autre des revendications 13 ou 14, la zone à fenêtre étant formée soit par recouvrement d'un substrat à fenêtre sur une couche formant barrière transparente soit par manipulation des propriétés du matériau de la couche formant barrière.

16. Étiquette (1) selon la revendication 15, la manipulation s'effectuant par dépôt chimique sélectif en phase vapeur d'aluminium.
